## Europäisches Patentamt

## European Patent Office

## Office européen des brevets

(19)

(11) Veröffentlichungsnummer : **0 339 169 B1**

(12) **EUROPÄISCHE PATENTSCHRIFT**

(45) Veröffentlichungstag der Patentschrift :
**12.08.92 Patentblatt 92/33**

(51) Int. Cl.$^5$ : **B23Q 23/00, B23Q 5/50**

(21) Anmeldenummer : **88730083.8**

(22) Anmeldetag : **14.04.88**

(54) **Motorische Feineinstell-Vorrichtung zum Vor- und Nachsteuern von Werkzeugen an ein- oder mehrspindligen Bearbeitungsmaschinen.**

(43) Veröffentlichungstag der Anmeldung :
**02.11.89 Patentblatt 89/44**

(45) Bekanntmachung des Hinweises auf die
Patenterteilung :
**12.08.92 Patentblatt 92/33**

(84) Benannte Vertragsstaaten :
**DE**

(56) Entgegenhaltungen :
**DE-A- 2 443 689
DE-A- 3 441 232
FR-A- 2 275 267
FR-A- 2 439 502**

(56) Entgegenhaltungen :
**GB-A- 1 017 805
US-A- 3 157 091
US-A- 3 320 821
US-A- 4 159 660**

(73) Patentinhaber : **Rissmann, Horst Günter
Tempelhofer Damm 58
W-1000 Berlin 42 (DE)**

(72) Erfinder : **Rissmann, Horst Günter
Tempelhofer Damm 58
W-1000 Berlin 42 (DE)**

(74) Vertreter : **Meissner, Peter E., Dipl.-Ing. et al
Patentanwaltsbüro Meissner & Meissner,
Herbertstrasse 22
W-1000 Berlin 33 (DE)**

Jouve, 18, rue Saint-Denis, 75001 PARIS

**Beschreibung**

Die Erfindung betrifft eine motorische Feineinstell-Vorrichtung zum Vor- und Nachsteuern von Werkzeugen an ein- oder mehrspindligen Bearbeitungsmaschinen gemäß Oberbegriff des Patentanspruchs 1. Aus der US-A-31 57 091 ist eine solche Einstellvorrichtung für Bearbeitungsmaschinen bekannt, wobei die Verschiebung über Keile bewirkt wird, d.h. bei dieser Konstruktion führt eine horizontale Verschiebung eines Keiles zu einer vertikalen Verschiebung des zugeordneten Keiles, der wiederum seinerseits das damit verbundene Bearbeitungswerkzeug vor- oder zurückbewegt.

Die Arbeitsspindeln an ein- oder mehrspindligen Bearbeitungsmaschinen weisen einerseits herstellungsbedingte Toleranzen auf und andererseits unterliegen die verwendeten Bearbeitungswerkzeuge, z.B. Drehstähle, einer Abnutzung, die sich in Maßveränderungen am herzustellenden Teil ausdrücken..

Insbesondere bei hochpräzisen Bearbeitungsteilen in Serienfertigung werden erhebliche manuelle, zeitaufwendige Einrichte- und Nachstellarbeiten notwendig, die die Produktivität und Wirtschaftlichkeit der meist kapitalintensiven Anlage beträchtliche senken.

Hinzu kommt die Produkthaftpflicht innerhalb der EG, die ab 1988 den Herstellerbetrieben auferlegt ist und verlangt, daß die hergestellten Teile nach bestimmten "Qualitätsrichtlinien" zu fertigen sind.

Die Herstellungstoleranzen werden hierbei durch obere und untere "Warngrenzen", je nach Herstellungsgüte, die bis zu 40% eingeengt, und es ist erforderlich, von der Toleranzmitte ausgehend zu fertigen.

Dies wiederum erfordert vom Hersteller erhöhte Qualitätserfüllung und setzt entsprechende "Prozeßfähigkeit" der Maschinen voraus.

Die Erfindung hat sich im vorgenannten Sinne zur Aufgabe gestellt, durch eine von außen selbsttätige Vorrichtung unterschiedliche Spindellagen (bei Mehrspindelmaschinen Teilungs- und Radialfehler) durch Vorsteuerung zu korrigieren und die Werkzeugabnutzung anhand von Erfahrungswerten zur jeweiligen (korrigierten) Spindel durch Nachsteuerung automatisch zu kompensieren.

Außerdem wird durch die Vorrichtung möglich, thermische Einflüsse, z.B. beim Anlauf der Maschine, durch kombinierte Vor- und Nachsteuerung zu regeln.

Gelöst wird diese Aufgabe erfindungsgemäß dadurch, daß der Werkzeugschlitten zur Feineinstellung während des Betriebes mittels einer von einem Schrittmotor angetriebenen Kurvenscheibenanordnung verschiebbar ist. Vorzugsweise Weiterbildungen ergeben sich aus den Unteransprüchen.

Bei der beabsichtigten Feineinstellung der Werkzeuge geht es um Gesamtwege kleiner 0,15 mm - 0,3 mm Drehteildurchmesser und einstellschritte im Bereich von 0,0005 bis 0,001 mm zum Drehteildurchmesser.

Bekannt sind Schrittmotoren mit hoher Auflösung in der radialen und/oder axialen Schrittfolge.

Bekannt sind Werkzeugschlitten mit entsprechender Werkzeughalterung und Handverstellung zur Ausrichtung des Werkzeuges auf "Endmaß".

Damit bei der beabsichtigten motorischen Verstellung und Endmaßfestlegung die wirksamen Schnittkräfte auf das Bearbeitungswerkzeug nicht zu einer plastischen Verformung der Stellglieder führen (Hertz'sche Pressung), ist vorteilhaft ein radial wirkender Schrittmotor vorgesehen, dessen Schrittstufen beispielsweise 1000 Schritte/Umdr. betragen.

Bei einer gewöhnlichen Gewinderollspindel und - mutter als Verstellglied in axialer Richtung besteht der Nachteil, daß wegen der notwendigen "Gängigkeit" die Gewindeflanken nie "voll" tragen und daß bei hohen Axialbelastungen immer die Gefahr von plastischen Verformungen bis hin zum Bruch von Gewindeanteilen besteht.

Außerdem müßten Feinstgewinde mit geringer Steigung und sehr geringen Flankenquerschnitten verwendet werden, um die geforderten Einstellwege von 0,005 mm bis 0,001 mm überhaupt reproduzierbar zu erreichen, was die Traganteile nur noch verringert, oder es müssen sehr komplizierte Übersetzungsgetriebe eingesetzt werden, die wiederum eine Summierung von "Spiel" und "Übertragungsfehlern" beinhalten.

Der Erfindungsgedanke geht deshalb davon aus, in Verbindung mit dem erwähnten, radial wirkenden Schrittmotor (z.B.1000 Schritte auf 1 Umdr.), Verstellglieder zu verwenden, die in Form von Planscheiben jeweils auf ihrer Funktionsseite korrespondierend miteinander nur eine Steigung aufweisen, dafür aber kraftschlüssig so dimensioniert sind, daß auch höchste Axialkräfte weder zu einer Beschädigung der Übertragungsmittel, noch zu einer Beeinträchtigung der Funktion des Schrittmotors führen.

Die erfindungsgemäße Vorrichtung und deren Funktionsweise sollen anhand der in den Zeichnungen schematisch dargestellten Ausführungsbeispielen erläutert werden.

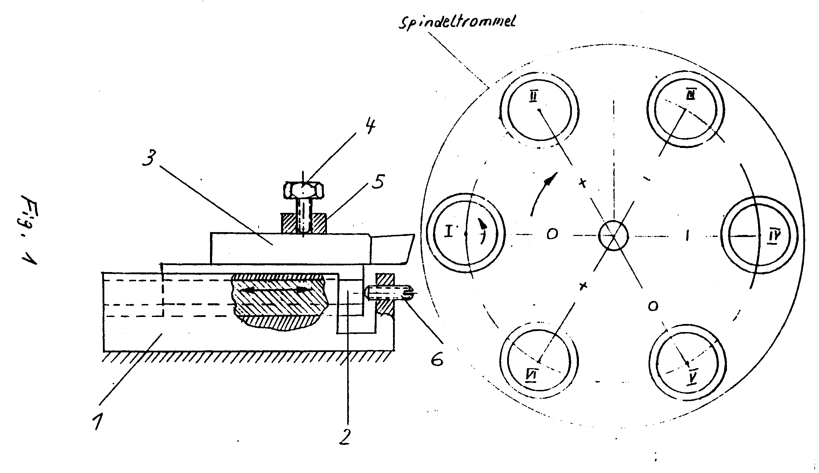

Die Fig. 1 stellt im Prinzip die Werkzeughaltung und -führung an einer Mehrspindelmaschine dar.

In dem maschinenfesten Bett 1 gleitet der Werkzeughalter 2 bis zum voreingestellten Anschlag 6, der auch an der Spindeltrommel liegen kann.

Der Einfachheit halber ist die Mechanik für den Arbeitshub und die Rückstellung des Gleitschlittens 2 nicht mit eingezeichnet.

Vor Inangriffnahme einer Arbeit muß das Werkzeug, in diesem Falle ein Drehstahl 3, über die Halterung 5 ausgerichtet und durch die Befestigungsschraube 4 angezogen werden.

Es ist leicht ersichtlich, daß bei herstellerbedingten Toleranzschwankungen (Teilungs- und/oder Radialfehler) der Arbeitsspindel I bis VI (symbolisiert durch Plus-und Minuszeichen in der Darstellung) ein fortwährendes, äußerst aufwendiges Nachstellen bzw. Nachrichten des Werkzeugs 3 über den Anschlag 6 oder die Befestigungsschraube 4 von Hand erfolgen muß, wenn einheitliche Maße an allen 6 Teilen der Mehrspindelmaschine eingehalten werden sollen.

Die Problematik liegt bei einer Werkzeugabnutzung oder bei thermischen Einflüssen zwar nicht ganz so hoch bzw. auf anderer Ebene, aber immer noch hoch genug, um für zeitsparende Abhilfe zu sorgen.

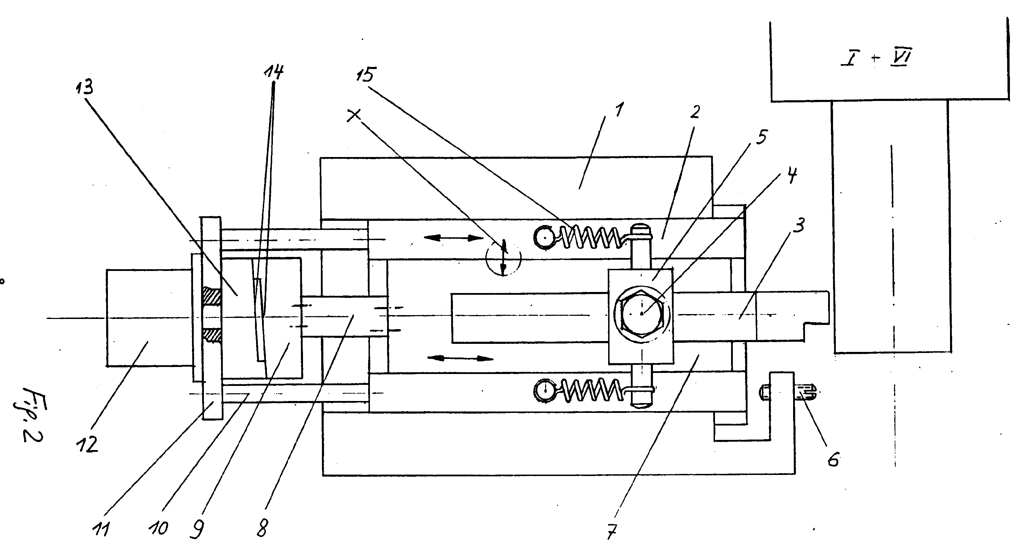

Nach Fig. 2 wird nun eine Vorrichtung vorgeschlagen, die in dem gleitenden Werkzeughalter 2 eine weitere Gleitführung 7 vorsieht, mit deren Ende über das Distanzstück 8 die Scheibe 9 starr verbunden ist, welche auf ihrer Funktionsseite eine Steigung 14 aufweist.

Auf dem gleitenden Werkzeugschlitten 2 ist zusätzlich eine Traverse 10, 11 angebracht, auf die ein radial wirkender Schrittmotor 12 aufgeflanscht, die Scheibe 13 rotierend antreibt, welche die die gleiche Steigung 14, aber entgegengesetzt zur Scheibe 9 aufweist.

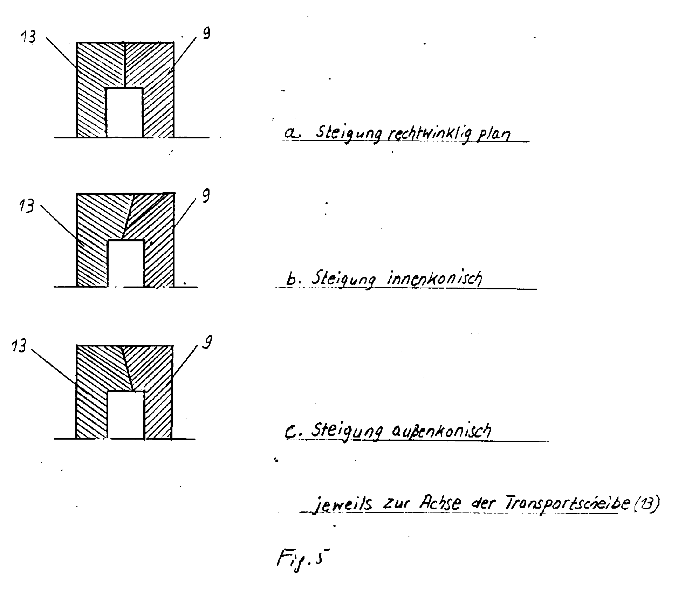

Zur optimalen Kraftverteilung können die Steigungen der Scheiben 9 und 13 neben einem planen Verlauf zur Drehachse, auch "konisch" - zentrierend (nach innen oder außen) ausgeführt sein, siehe Fig. 5.

Um die Scheiben 9 und 13 kraftschlüssig zu halten, sind Rückzugsfedern 15 angeordnet.

Durch eine nicht eingezeichnete Sperre X, läßt sich die Gleitführung 7 im Gleitschlitten 2, z.B. hydraulisch gesteuert, an jeder beliebigen Stelle blockieren, um die Stabilität des Systems noch zu erhöhen.

Der funktionelle Ablauf ist folgender:

a. Das Werkzeug 3 wird mit der Spannung 4, 5 festgehalten und über eine nicht dargestellte Handspindelverstellung grob eingestellt.

b. Jede Feineinstellung, Korrektur und notwendige Nachrichtung des Werkzeugs 3 wird motorisch über die Zusatzeinrichtungen 7 bis 15 und X vorgenommen. Dies kann zeit- und kostensparend sogar bei laufender Maschine während der Schaltzeit erfolgen.

Ein Hauptmerkmal und -vorteil dabei ist, daß der gesamte Feineinstellvorgang über rechnergestützte Computer vorprogrammiert und gesteuert werden kann. Die Meßwertabnahme und -kontrolle (Ist- und/oder Referenzwerte) erfolgt über elektronische Meßtaster, z.B. zwischen Schlitten 2 und 7 an geeigneter Stelle.

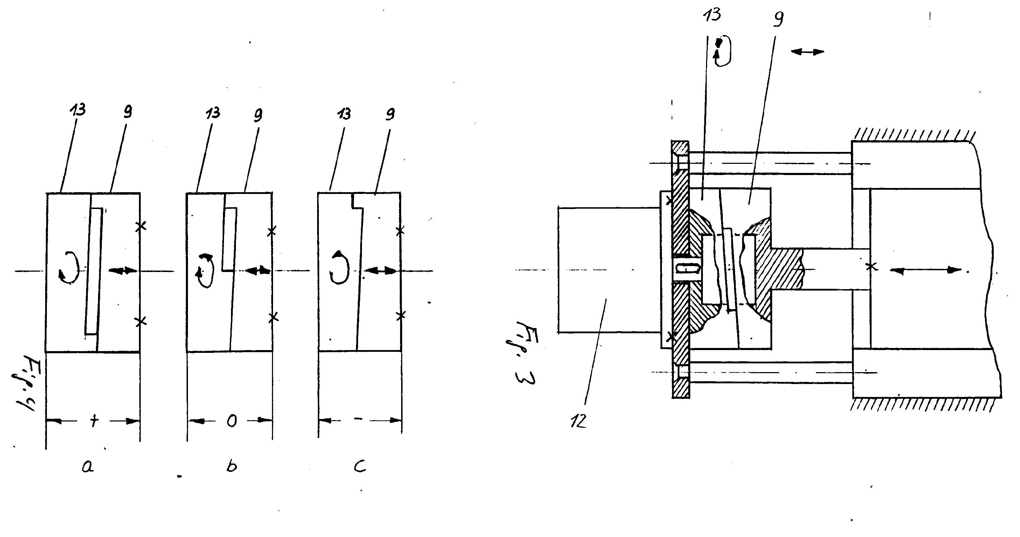

In der Fig. 3 ist die Wirkweise der Scheiben 9 und 13 im Zusammenhang mit den Schrittmotor 12 dargestellt, wobei die Kraftschlüssigkeit der großen Auflagefläche deutlich wird, so daß aus Gründen für die Herstellung der Steigungen an den Scheiben 9 und 13 innen "freigedreht" werden kann.

Bei einer Steigung der Scheiben 9 und 13 von jeweils je 0,25 mm ist der Werkzeugweg = 0,25 mm bei einer Umdrehung des Schrittmotors und somit die Auflösung bei 1000 Schritten = 0,25 : 1000 = 0,00025 mm, was auf den Drehteildurchmesser bezogen = 0,0005 mm ausmacht.

In Fig. 4 ist symbolisch dargestellt, daß für die beabsichtigten Feineinstellungen ein Teilbereich in der Drehbewegung der Scheiben 9 und 13 von 60% = 216° durchaus ausreicht.

Die Fig. 4b zeigt dabei eine Null-Stellung, die Fig. 4a den Plusweg, die Fig. 4c den Minusweg.

Der bei einer 60%igen Nutzung zurücklegbare Gesamtweg beträgt danach 0,15 mm, oder auf das Drehteil bezogen 0,3 mm, was auch den eingangs gestellten Forderungen entspricht.

Die Fig. 5a-c zeigen, daß im Sinne des Anspruchs 7 die Steigungen der Gleitflächen der Scheiben 9, 13 rechtwinklig plan, innen konisch oder außen konisch sein können.

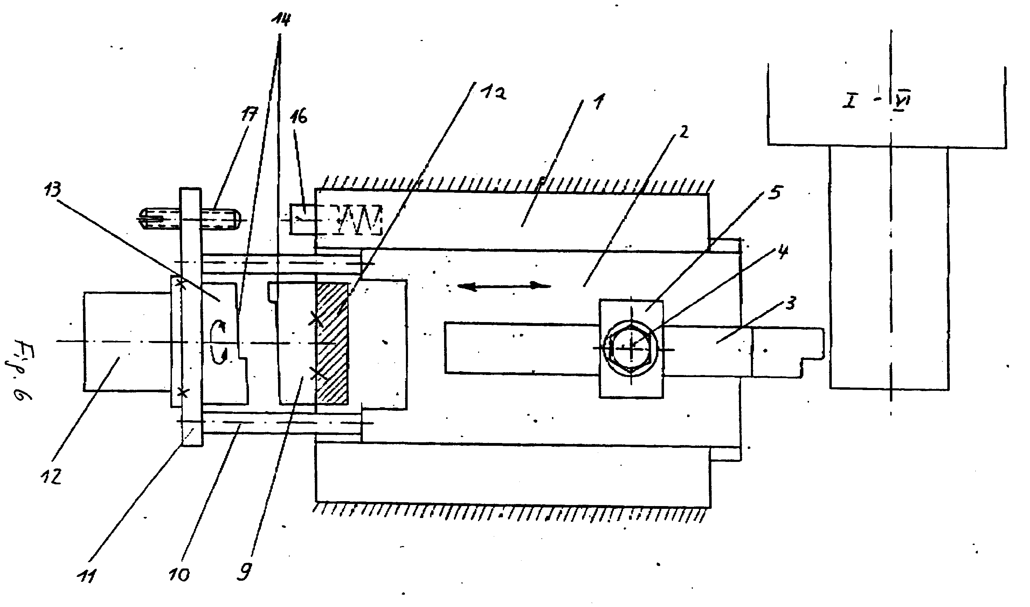

Die Fig. 6 stellt eine Variante der Fig. 2 dar, in der die Gleitführung 7, die Distanzachse 8 und die Rückzugsfedern 15 entfallen.

Die Scheibe 9 ist jetzt auf dem maschinenfesten Bett 1 starr angebracht (symbolisiert durch x und den gestrichelten, hochgezogenen Flansch 1a am maschinenfesten Bett 1).

Die Scheibe 13, die über die Traverse 10, 11 mit dem gleitenden Werkzeugschlitten 2 verbunden und genau fluchtend zur Scheibe 9 ausgerichtet ist, wird wie in Fig. 2 über den Schrittmotor 12 rotierend zur Wegfeinverstellung benutzt.

An dem maschinenfesten Bett 1 ist zusätzlich ein Dämpfungsanschlag 16 (z.B. hydraulisch wirkend) und an der Traverse 11 eine verstellbare Schraube 17 zur Regulierung der Dämpfung angebracht.

Der funktionelle Ablauf ist hierbei folgender:

Das Werkzeug 3 wird über die Halterung 5 ausgerichtet und durch die Befestigungsschraube 4 angezogen.

Der Einfachheithalber ist auch hier die Voreinstellmechanik für den Arbeitshub und die Rückführung des Werkzeugschlittens 2 nicht mit eingezeichnet.

Die Feineinstellung und Korrektur im Hunderstel- und Tausendstelmillimeterbereich erfolgt über den Schrittmotor 12 und die rotierend verstellbare Scheibe 13 quasi als Endanschlag für die Werkzeugbewegung, wobei die Dämpfung 16, 17 ein schlaghaftes Aufeinandertreffen der Scheiben 9 und 13 verhindert.

Im Prinzip kann dadurch, neben der Einsparung von Bauteilen, die Baugröße von Schrittmotor 12 und Scheiben 9 und 13 kleiner gehalten werden, da die Gleitführung 7 in Fig. 2 nicht bewegt werden muß, wodurch auch die hydraulische Verklemmung 'X' entfällt.

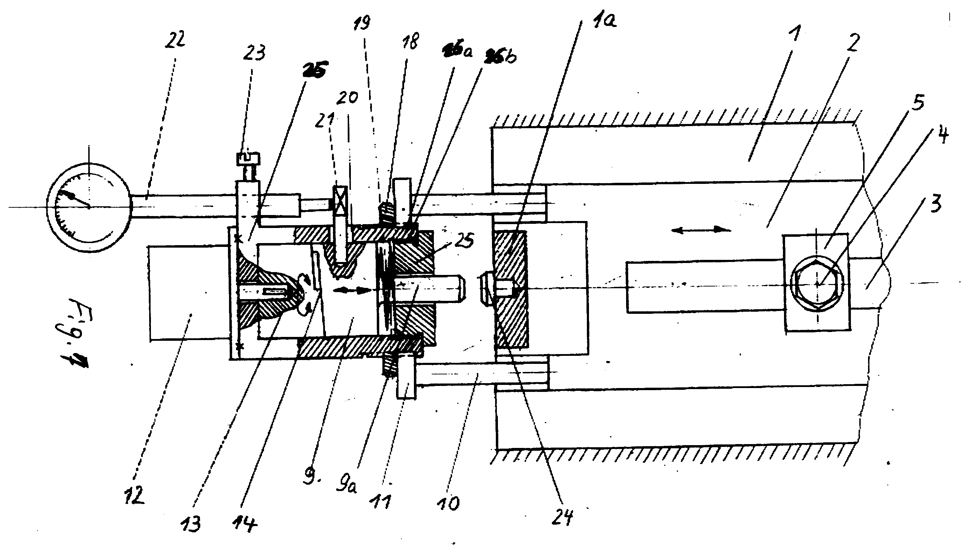

Die Fig. 7 stellt eine weitere Variante der erfindungsgemäßen Vorrichtung dar.

Auf dem hochgezogenen (gestrichelten) Flansch 1a am maschinenfesten Bett 1 sitzt jetzt ein fester Anschlagstift 24.

Die Traverse 11, die nach wie vor über die Achsen 10 mit dem gleitenden Werkzeugschlitten 2 verbunden ist, erhält eine Gewindebohrung 26a.

Hinzu kommt die Gewindehülse 26 als Führung für die Scheibe 9 mit ihrem verlängerten Anschlag 9a.

In der Hülse 26 ist gleichzeitig ein Langloch 20 vorgesehen, die über den Stift 21 der Scheibe 9 geradlinige Führung gibt.

Am vorderen Ende der Hülse 26 greift ein Außengewinde in das entsprechende Gewinde 26a der Traverse 11 und ist somit bei Drehung der Hülse 26 in der Längsrichtung grob verstellbar.

Diese Längsbewegung kann durch die Kontermutter 18 an der jeweils beabsichtigten Stelle arretiert werden.

Die Hülse 26 besitzt weiter am vorderen Ende ein Innengewinde 26b, in das die Verschlußmutter 25 eingreift, die über die Feder 19 die Scheiben 9 und 13 kraftschlüssig hält.

Am hinteren Ende der Hülse 26, an der auch der Schrittmotor 12 eingeflanscht ist, befindet sich ein Steg mit Führung, z.B. für eine Meßuhr 22, die über die Schraube 23 arretiert werden kann.

Der funktionelle Ablauf ist hierbei folgender:
Durch die Verwendung der Hülse 26 wird erreicht, daß durch Verdrehung ein Weggrobeinstellung erfolgt, die über die Kontermutter 18 an der gewünschten Stelle arretiert wird.

Die Feineinstellung erfolgt dann - wie auch bei den anderen Ausführungen - über den Schrittmotor 12 und die Scheiben 9, 13, wobei der Führungsstift 21 als Meßanschlag, z.B. für die Meßuhr 22, dient und auch zur elektronischen Meßwegerfassung.

## Patentansprüche

1. Motorische Feineinstell-Vorrichtung zum Vor- und Nachsteuern von Werkzeugen ( 3) an ein- oder mehrspindligen Bearbeitungsmaschinen, wobei das Bearbeitungswerkzeug (3) in einer Halterung angeordnet und arretierbar ist und die Halterung Teil eines Werkzeugschlittens (2) ist, mit dem das Werkzeug in die Arbeitsposition bewegbar ist,
dadurch gekennzeichnet,
daß der Werkzeugschlitten (2) zur Feineinstellung während des Betriebes mittels einer von einem Schrittmotor (12) angetriebenen Kurvenscheibenanordnung (9, 13) verschiebbar ist., wobei die Kurvenscheibenanordnung (9, 13) aus zwei stirnseitig Gleitflächen (14) mit korrespondierenden Steigungen aufweisenden Scheiben besteht, von denen ein (13) mit dem Schrittmotor (12), der über eine Traverse (11) am Werkzeugschlitten (2) abgestützt ist, drehbar verbunden ist, während die andere Scheibe (9) drehfest relativ zur ersten Scheibe angeordnet ist.

2. Vorrichtung nach Anspruch 1,
dadurch gekennzeichnet,
daß in dem Werkzeugschlitten (2) ein zweiter Werkzeugschlitten (7) verschiebbar gelagert ist, der die Halterung (4, 5) für das Bearbeitungswerkzeug (3) aufnimmt und daß die andere Scheibe (9) über ein Distanzstück (8) mit dem zweiten Werkzeugschlitten (7) verbunden ist.

3. Vorrichtung nach Anspruch 1,
dadurch gekeinnzeichnet,
daß der Werkzeugschlitten (2) über eine Traverse (10, 11) eine Gewindehülse (15) trägt, die in der Traverse und relativ zu dieser in Richtung des Werkzeugvorschubes verdreh- und verschiebbar ist, daß an der Hülse (26) die vom Schrittmotor (12) angetriebene Kurvenscheibe (13) drehbar abgestützt ist, daß die zweite Scheibe (9) innerhalb der Hülse (15) gegen eine Federkraft (Feder 19) axial verschiebbar ist und mit einem am Maschinenbett (1) fest angeordneten Anschlag (24) zusammenwirkt.

4. Vorrichtung nach Anspruch 1,
dadurch gekenzeichnet,
daß zwischen der Traverse (11) und dem Maschinenbett (1) eine federnde Anschlagdämpfung (16, 17) vorgesehen ist.

5. Vorrichtugn nach Anspruch 2,
dadurch gekennzeichnet,

daß die Scheiben (9, 13) durch zwischen beiden Werkzeugschlitten (2, 7) wirkende Rückzugsfedern (15) kraftschlüssig gegeneinander drückbar sind.

6. Vorrichtung nach den Ansprüchen 1 bis 5,
dadurch gekennzeichnet,
daß die stirnseitigen Gleitflächen der Scheiben (9, 13) zur Achse der Scheiben rechtwinklig plan, innen konisch oder außen konisch sind.

7. Vorrichtung nach Anspruch 3,
dadurch gekennzeichnet,
daß die zweite Kurvenscheibe (9) eine zapfenartige Verlängerung aufweist, die mit dem Anschlag (24) zusammenwirkt.

8. Vorrichtung nach den Ansprüchen 1 bis 6,
dadurch gekennzeichnet,
daß als Schrittmotor (12) ein radial wirkender Schrittmotor vorgesehen ist.

## Revendications

1. Dispositif de réglage fin motorisé pour piloter des outils (3) dans des machines d'usinage à un ou plusieurs arbres, l'outil d'usinage (3) étant agencé dans un support et pouvant être stoppé et le support faisant partie d'un chariot d'outil (2), grâce auquel l'outil peut être déplacé dans la position de travail,
caractérisé en ce que
le chariot d'outil (2) est déplaçable pour le réglage fin, en service, au moyen d'un agencement à came (9,13) entraîné par un moteur pas à pas (12), l'agencement à came (9,13) étant constitué par deux disques présentant des surfaces de glissement frontales (14) à inclinaisons correspondantes, desquels l'un (13) est relié de façon rotative au moteur pas à pas (12), qui s'appuie sur le chariot d'outil (2) par l'intermédiaire d'une traverse (11), tandis que l'autre disque (9) est agencé de façon fixe en rotation par rapport au premier disque.

2. Dispositif selon la revendication 1,
caractérisé en ce que,
dans le chariot d'outil (2), est monté mobile un second chariot d'outil (7), qui reçoit le support (4,5) pour l'outil d'usinage (3), et en ce que l'autre disque (9) est relié au second chariot d'outil (7) par l'intermédiaire d'une pièce d'écartement 8).

3. Dispositif selon la revendication 1,
caractérisé en que
le chariot d'outil (2) porte une douille filetée (26), par l'intermédiaire d'une traverse (10,11), qui peut être déplacée et tournée dans la traverse'et par rapport à celle-ci dans la direction d'avance de l'outil, en ce que la came (13) entraînée par le moteur pas à pas (12) peut tourner dans la douille (26), en ce que le second disque (9) peut être déplacé axialement à l'intérieur de la douille (26) contre la force d'un ressort (ressort 19) et coopère avec une butée (24) agencée fixement sur le banc de machine (1).

4. Dispositif selon la revendication 1,
caractérisé en ce
qu'un amortisseur de butée élastique (16,17) est prévu entre la traverse (11) et le banc de machine (1).

5. Dispositif selon la revendication 2,
caractérisé en ce que
les disques (9,13) peuvent être pressés l'un contre l'autre, de façon commandée, par des ressorts de rappel (15) agissant entre les deux chariots d'outil (2,7).

6. Dispositif selon les revendications 1 à 5,
caractérisé en ce que
les surfaces de glissement frontales des disques (9,13) sont, par rapport à l'axe des disques, rectangulaires planes, intérieurement coniques ou extérieurement coniques.

7. Dispositif selon la revendication 3,
caractérisé en ce que
le second disque (9) présente un prolongement du type tourillon, qui coopère avec la butée (24).

8. Dispositif selon les revendications 1 à 6,
caractérisé en ce que,
en tant que moteur pas à pas (12), est prévu un moteur pas à pas agissant radialement.

## Claims

1. A motor-operated fine adjustment device for the advance control and follow-up control of tools (3) on single-spindle or multi-spindle processing machines, wherein the processing tool (3) is arranged in and can be locked in a holder and the holder forms part of a tool slide (2) with which the tool can be moved into the operating position,
characterised in that
for fine adjustment during operation the tool slide (2) is displaceable by means of a cam disc arrangement (9, 13) driven by a stepping motor (12), where the cam disc arrangement (9, 13) comprises two discs which at their end sides posses sliding surfaces (14) with corresponding gradients, of which one disc (13) is rotatably connected to the stepping motor (12), which latter is supported on the tool slide (2) via a crossbeam (11), whilst the other disc (9) is arranged so as to be rotation-resistant with respect to the first disc.

2. A device as claimed in Claim 1,
characterised in that
a second tool slide (7) is displaceably mounted in the tool slide (2), which second tool slide (7) accommodates the holder (4, 5) for the processing tool (3), and that the other disc (9) is connected via a spacer (8) to the second tool slide (7).

3. A device as claimed in Claim 1,
characterised in that
via a crossbeam (10, 11) the tool slide (2) bears a threaded sleeve (15) which is rotatable and displaceable in the crossbeam and relative to the crossbeam in the direction of advance of the tool, that the cam disc (13) which is driven by the stepping motor (12) is rotatably supported on the sleeve (26), that the second disc (9) is axially displaceable within the sleeve (15) against a spring force (spring 19) and cooperates with a stop means (24) permanently arranged on the bench (1).

4. A device as claimed in Claim 1,
characterised in that
a resilient attenuating stop means (16, 17) is provided between the crossbeam (11) and the bench (1).

5. A device as claimed in Claim 2,
characterised in that
the discs (9, 13) can be frictionally urged against one another by means of return springs (15) operating between the two tool slides (2, 7).

6. A device as claimed in Claims 1 to 5,
characterised in that
the end-side sliding surfaces of the discs (9, 13) extend in a plane orthogonal to the axis of the discs, and are internally conical or externally conical.

7. A device as claimed in Claim 3,
characterised in that
the second cam disc (9) comprises a peg-like extension which cooperates with the stop means (24).

8. A device as claimed in Claims 1 to 6,
characterised in that
a radially operating stepping motor is provided as stepping motor (12).

Fig. 1

Fig. 2

Fig. 3

Fig. 4

a. Steigung rechtwinklig plan

b. Steigung innenkonisch

c. Steigung außenkonisch

jeweils zur Achse der Transportscheibe (13)

Fig. 5

Fig. 6

Fig. 1